# EUROPÄISCHE PATENTSCHRIFT

(11) **EP 0 677 488 B1**
(45) Veröffentlichungstag und Bekanntmachung des Hinweises auf die Patenterteilung: **16.07.1997**
(21) Anmeldenummer: 95105485.7
(22) Anmeldetag: 12.04.1995
(51) Int. Cl.: C03B 23/03

(54) **Pressbiegestation für das Biegen van Glasscheiben**
Press-bending station for bending glass sheets
Poste de presse pour le bombage des feuilles de verre

(30) Priorität: 15.04.1994 DE 4412747
(43) Veröffentlichungstag der Anmeldung: 18.10.1995
(73) Patentinhaber: FLACHGLAS AKTIENGESELLSCHAFT, 90766 Fürth (DE)
(72) Erfinder: Funk, Dieter, Dipl.-Ing., D-29379 Witten (DE); Bruns, Dieter, Dipl.-Ing., D-47495 Rheinberg (DE); Wenning, Rolf, Dipl.-Ing., D-46397 Bocholt (DE); Brans, Walter, Dipl.-Ing., D-45659 Recklinghausen (DE)
(74) Vertreter: Honke, Manfred, Dr.-Ing.

(56) Entgegenhaltungen:
- EP-A- 0 448 959
- EP-A- 0 677 489
- WO-A-90/15781
- WO-A-93/14038
- DE-A- 1 935 161

## Beschreibung

Die Erfindung betrifft eine Preßbiegestation für das Biegen von Glasscheiben im Zuge der automatischen Fertigung von innerhalb vorgegebener Losgrößen gleichen Kraftfahrzeugscheiben, bei der die zu biegenden Glasscheiben in einem Durchlaufofen auf eine vorgegebene Biegetemperatur erwärmt und unmittelbar nach Verlassen des Durchlaufofens mit Hilfe eines Horizontalförderers liegend in die Preßbiegestation eingeführt werden, welche Preßbiegestation in ihrem Pressengestell eine obere als beheizbare Vollform ausgeführte Preßpatrize und eine untere, als Ringwerkzeug ausgeführte, Preßmatrize aufweist. Es versteht sich, daß die Preßpatrize im Grundriß der Geometrie der zu biegenden Glasscheiben angepaßt ist. Sie besitzt eine nach Maßgabe der Krümmung der gebogenen Glasscheiben eingerichtete Glasscheibenkontaktfläche. Der Biegevorgang erfolgt im Taktbetrieb, Glasscheibe folgt auf Glasscheibe. - Die englisch-sprachige Literatur spricht von einem male-Werkzeug und einem female-Werkzeug. Es versteht sich, daß in der Preßbiegestation wie in einer Presse ein Öffnen und Schließen der Preßwerkzeuge erfolgt. Eine derartige Preßbiegestation ist bekannt (WO 93/14038). Mit der Beheizung soll in der Glasscheibe ein Temperaturprofil erzeugt werden, dessen absolute Temperaturen auch höher sein können, als die im Durchlaufofen erzeugten Temperaturen der Glasscheibe.

Bei einer anderen bekannten Preßbiegestation (WO 90/11973), wird Wert darauf gelegt, daß die Glasscheibenkontaktfläche entsprechend der Krümmung der zu biegenden Glasscheibe gestaltet ist. Der Aufbau der Preßpatrize insgesamt bleibt frei. Sie ist nicht beheizt und nicht gekühlt. Die Temperatur, die sich im automatischen Betrieb der Preßbiegestation an der Preßpatrize bzw. an der Glasscheibenkontaktfläche einstellt, wird in Kauf genommen und als geeignet angesehen. In der Praxis ist im Rahmen der vorstehend beschriebenen bekannten Maßnahmen die Preßpatrize mehrschichtig unter Zwischenschaltung von Wärmedämmschichten aufgebaut. Obgleich die gebogenen Glasscheiben in der Preßbiegestation verweilen, bis die durch den Preßbiegevorgang erzeugte Gestaltung ausreichend frei von inneren Spannungen in den gebogenen Glasscheiben ist und folglich eine gleichmäßige Abkühlung nicht zu unkontrollierten Geometriefehlern führen kann, zeigen sich bei der automatischen Herstellung von innerhalb vorgegebenen Losgrößen gleichen Glasscheiben an den gebogenen Glasscheiben unkontrollierte Geometriefehler. Diese stören insbesondere dann, wenn hohe Anforderungen an die Fertigungsgenauigkeit gestellt werden.

Das technische Problem der Erfindung lautet, bei einer Preßstation für das Biegen von Glasscheiben im Zuge der automatischen Herstellung von innerhalb vorgegebener Losgrößen gleichen Kraftfahrzeugscheiben sicherzustellen, daß unkontrollierte Geometriefehler an den fertiggebogenen Glasscheiben nicht mehr auftreten.

Zur Lösung dieser Aufgabe ist Gegenstand der Erfindung eine Preßbiegestation für das Biegen von Glasscheiben im Zuge der automatischen Herstellung von innerhalb vorgegebener Losgrößen gleichen Kraftfahrzeugscheiben, bei der die zu biegenden Glasscheiben in einem Durchlaufofen auf eine vorgegebene Biegetemperatur erwärmt und unmittelbar nach dem Verlassen des Durchlaufofens mit Hilfe eines Horizontalförderers liegend in die Preßbiegestation eingeführt werden, welche Preßbiegestation in ihrem Pressengestell eine obere als beheizbare Vollform ausgeführte Preßpatrize und eine untere, als Ringwerkzeug ausgeführte, Preßmatrize aufweist, gekennzeichnet durch die Kombination der folgenden Merkmale:
a) die Preßpatrize besteht aus einer Aluminiumlegierung,
b) die Preßpatrize besitzt Heizkanäle für eine Fluidbeheizung mit Hilfe eines flüssigen Wärmeträgers und ist mit ausreichend homogener Temperaturverteilung auf eine unterhalb der Biegetemperatur liegende Wärmedehnungstemperatur beheizbar,
c) die Temperatur der Preßpatrize ist über den flüssigen Wärmeträger steuerbar und/oder regelbar,
wobei die Wärmedehnungstemperatur der Preßpatrize so gesteuert und/oder so geregelt ist, daß die spezifische Wärmedehnung der Preßpatrize und die Wärmedehnung der mit Biegetemperatur auf die Preßmatrize zentrisch aufgelegten, zu biegenden Glasscheibe praktisch übereinstimmen. Es sei noch einmal wiederholt, daß die Preßpatrize im Grundriß der Geometrie der zu biegenden Glasscheibe angepaßt ist und eine nach Maßgabe der Krümmung der gebogenen Glasscheibe eingerichtete Glasscheibenkontaktfläche aufweist. Nach bevorzugter Ausführungsform der Erfindung ist die Anordnung so getroffen, daß die Preßpatrize bei Wärmedehnungstemperatur eine der Krümmung der gebogenen Glasscheibe entsprechende Glasscheibenkontaktfläche besitzt. Die Glasscheibenkontaktfläche ist spanend bearbeitet und geformt.

Die Erfindung geht von der Erkenntnis aus, daß die eingangs beschriebenen unkontrollierten Abweichungen in der Geometrie von im übrigen gleichen gebogenen Glasscheiben eines Loses auf unterschiedlichen Wärmedehnungen der zu biegenden Glasscheiben einerseits und der Preßpatrize, zumindest im Bereich der Glasscheibenkontaktfläche, andererseits beruhen, und vermeidet diese unterschiedlichen Wärmedehnungen. Überraschenderweise lassen sich dadurch die unkontrollierten Abweichungen unterdrücken. Überraschenderweise wirkt sich die Tatsache nicht störend aus, daß die Glasscheiben selbst bei dem Biegevorgang eine Abkühlung erfahren, während sich die Temperatur der Preßpatrize beim Biegevorgang praktisch nicht ändert. Grundsätzlich ist es bekannt (DE-AS 19 35 161), einem Zurückfedern der gebogenen Glasscheiben bei ähnlichen Preßbiegevorgängen durch eine Gegenkühlung der Glasscheiben selbst zu begegnen, die über eine Beheizung der Preßpatrize bewirkt wird, die auch aus einer Aluminiumlegierung bestehen kann. Während hier gleichsam eine Temperaturkorrektur an den gebogenen Glasscheiben durchgeführt wird, erfolgt erfindungsgemäß eine Wärmedehnungskorrektur beim Biegen der Glasscheiben, und zwar mit Hilfe der in Kombination zu den Merkmalen a), b) und c) verwirklichten Abstimmungsregel. Im Rahmen der bekannten Maßnahmen (WO 90/11 973, DE-AS 19 35 161) wurde nicht erkannt, daß eine abgestimmte Temperaturregelung und -steuerung dahingehend erforderlich ist, die unterschiedlichen Wärmedehnungen zumindest an der Glasscheibenkontaktfläche der Preßpatrize einerseits, in der Glasscheibe andererseits zu vermeiden.

Im Rahmen der Erfindung kann mit den verschiedenen Aluminiumgußlegierungen gearbeitet werden, z. B. mit den Legierungen, die in "Stoffhütte" (1967, Verlag Wilh. Ernst & Sohn, S. 231) beschrieben sind. Insbesondere kann mit Aluminiumgußlegierungen gearbeitet werden, die für Bügeleisensohlen und ähnlich beanspruchte Gegenstände entwickelt wurden und neben ihrer guten Wärmeleitfähigkeit bei den auftretenden Temperaturen auch eine verhältnismäßig hohe Festigkeit besitzen.

Im einzelnen bestehen im Rahmen der Erfindung mehrere Möglichkeiten der weiteren Ausbildung und Gestaltung einer erfindungsgemäßen Preßbiegestation. Um eine sehr homogene Temperaturverteilung in der Preßpatrize zu erreichen, lehrt die Erfindung, daß die Preßpatrize quer zur Transportrichtung des Horizontalförderers verlaufende Heizkanäle aufweist, die an in Transportrichtung verlaufende Verteilerrohre bzw. Sammlerrohre angeschlossen und von dem Wärmeträger durchströmbar sind. Die Temperatur der Preßpatrize ist über den Mengenstrom und/oder die Temperatur des Wärmeträgers steuerbar oder regelbar.

Als Wärmeträger eignen sich im Rahmen der Erfindung die verschiedensten flüssigen Substanzen. Vorzugsweise ist die Preßpatrize mit einem synthetischen Öl oder einem Mineralöl als Wärmeträger beheizbar. Bei einer Temperatur der zu biegenden Glasscheiben von etwa 600° C soll die Preßpatrize, zumindest im Bereich ihrer Glasscheibenkontaktfläche, eine Temperatur von etwa 200° C aufweisen.

Es versteht sich, daß bei der erfindungsgemäßen Preßbiegestation die Heizkanäle der Preßpatrize auf verschiedene Weise gestaltet sein können. Handelt es sich um eine Aluminiumgußlegierung, die zu praktisch porenfreien Preßpatrizen führt, so können die Heizkanäle als Bohrungen ausgeführt sein. Einfacher ist es, die Preßpatrize mit Heizkanälen zu versehen, die aus eingegossenen Rohren, z. B. aus eingegossenen Stahlrohren, bestehen. Stahlrohre deshalb, weil diese ebenso wie die Aluminiumgußlegierung Wärmedehnungskoeffizienten aufweisen, die so nahe beieinander liegen, daß auf unterschiedlichen Wärmedehnungen zwischen dem Aluminiumwerkstoff der Preßpatrizen einerseits und den eingegossenen Rohren andererseits resultierende Probleme nicht auftreten. Wie immer die Heizkanäle eingerichtet bzw. gestaltet sind, sie sind zweckmäßigerweise für eine Strömungsgeschwindigkeit des Wärmeträgers von etwa 1 Liter/sek eingerichtet. Das empfiehlt sich auch aus steuerungstechnischen bzw. regeltechnischen Gründen in bezug auf die Temperatur der Preßpatrize bzw. des Oberflächenbereichs der Preßpatrize an der Glasscheibenkontaktfläche. Wird wie beschrieben gearbeitet, so weisen die Heizkanäle der Preßpatrize im allgemeinen einen Innendurchmesser im Bereich von 8 bis 10 mm auf. Verwirklicht man diese Geometrie, so besitzt der Wärmeträger zweckmäßigerweise eine spezifische Wärmekapazität im Bereich zwischen 1,5 bis 2,5 KJ/kg. Dazu kann ein bei einer Temperatur von etwa 300° C verdampfungsstabiles synthetisches Öl oder ein Mineralöl eingesetzt werden.

Im folgenden wird die Erfindung anhand einer lediglich ein Ausführungsbeispiel darstellenden Zeichnung ausführlicher erläutert. Es zeigen in schematischer Darstellung
- Fig. 1: die Preßpatrize einer erfindungsgemäßen Preßbiegestation,
- Fig. 2: eine Seitenansicht des Gegenstandes der Fig. 1,
- Fig. 3: eine Draufsicht auf den Gegenstand der Fig. 2 und
- Fig. 4: die der Preßpatrize des Gegenstandes der Fig. 1 zugeordnete Preßmatrize.

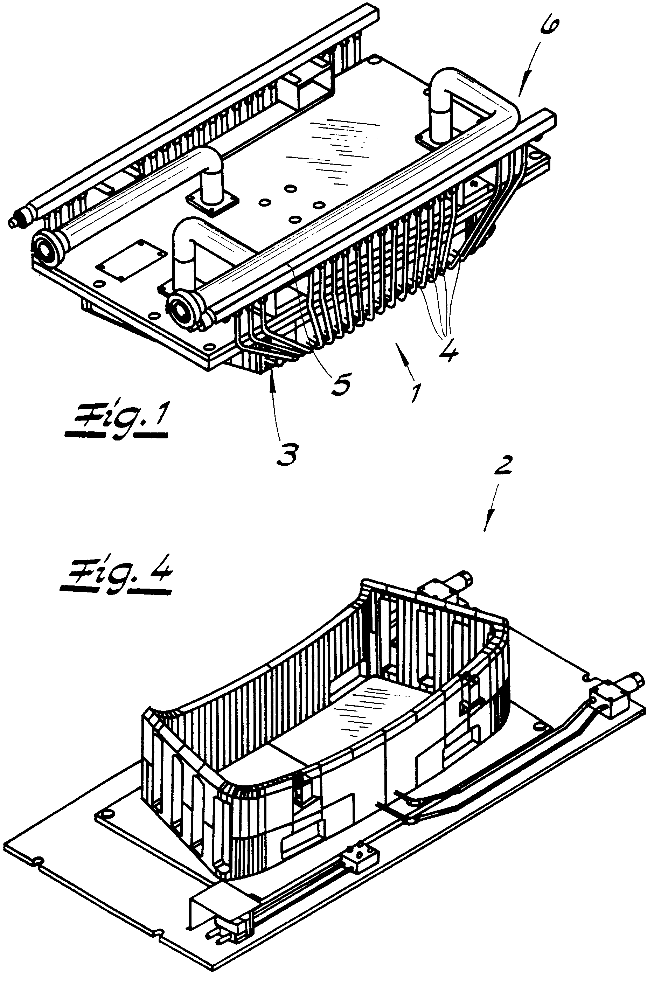

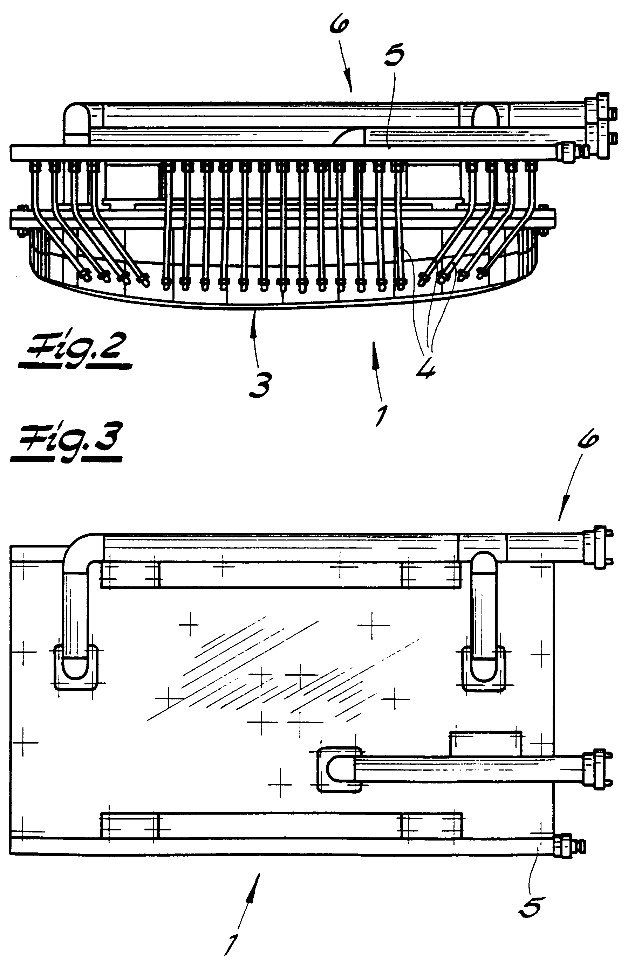

Die Preßbiegestation, für die die dargestellten Gegenstände bestimmt sind, ist für das Biegen von Glasscheiben im Zuge der automatischen Fertigung von innerhalb vorgegebener Losgrößen gleichen Kraftfahrzeugscheiben bestimmt. Sie mag in ihrem grundsätzlichen Aufbau so gestaltet sein, wie die eingangs beschriebene bekannte Preßbiegestation (WO 90/11 973). Die zu biegenden Glasscheiben, die in den Figuren nicht dargestellt sind, werden bei der automatischen Fertigung von Kraftfahrzeugscheiben in einem Durchlaufofen auf eine vorgegebene Biegetemperatur erwärmt und unmittelbar nach Verlassen des Durchlaufofens mit Hilfe eines Horizontalförderers liegend in die Preßbiegestation eingeführt. Die Preßbiegestation besitzt in ihrem Pressengestell eine obere Preßpatrize 1, die in den Figuren 1 bis 3 dargestellt worden ist, und eine untere, als Ringwerkzeug ausgeführte Preßmatrize 2, zu der auf die Figur 4 verwiesen wird. Es versteht sich, daß diese Preßwerkzeuge 1, 2 in dem Pressengestell einander zugeordnet sind und daß die Kinematik wie bei Pressen üblich eingerichtet ist. Die Preßwerkzeuge 1, 2 entsprechen im Grundriß der Geometrie der zu biegenden Glasscheiben. Die Preßpatrize 1 besitzt eine nach Maßgabe der Krümmung der gebogenen Glasscheiben eingerichtete Glasscheibenkontaktfläche 3. - Im Ausführungsbeispiel und nach bevorzugter Ausführungsform der Erfindung ist die Anordnung so getroffen, daß die gebogenen Glasscheiben unter der Preßpatrize 1 nach dem Biegevorgang durch Unterdruck festgehalten werden können. Dazu besitzt die Preßpatrize 1 Bohrungen und Kanäle, die an eine Unterdruckwelle angeschlossen sind. Sie wurden nicht gezeichnet. Sie werden bei geöffneter Presse auf ein geeignetes Fördermittel abgelegt. Auch insoweit wird auf den Stand der Technik verwiesen.

Aus den Figuren 1 bis 3 entnimmt man, daß die Preßpatrize als eine gegossene Vollform ausgebildet ist. Sie besteht erfindungsgemäß aus einer Aluminiumlegierung. Die Preßpatrize besitzt Heizkanäle 4 für eine Fluidbeheizung mit Hilfe eines flüssigen Wärmeträgers. Sie ist mit ausreichend homogener Temperaturverteilung auf eine unterhalb der Biegetemperatur liegende Wärmedehnungstemperatur beheizbar. Die Temperatur der Preßpatrize 1 ist vorzugsweise über den Mengenstrom des flüssigen Wärmeträgers steuerbar und/oder regelbar. Die Wärmedehnungstemperatur der Preßpatrize 1 ist so gesteuert und/oder geregelt, daß die spezifische Wärmedehnung der Preßpatrize 1 und die Wärmedehnung der mit Biegetemperatur auf die Preßmatrize 2 zentrisch aufgelegten zu biegenden Glasscheibe praktisch übereinstimmen. Auch die ringförmige Preßmatrize 2 kann im Auflagebereich der Glasscheibe beheizbar sein. Die Preßpatrize 1 besitzt eine bei Wärmedehnungstemperatur der Krümmung der gebogenen Glasscheibe entsprechende Glasscheibenkontaktfläche.

Im Ausführungsbeispiel und nach bevorzugter Ausführungsform der Erfindung weist die Preßpatrize 1 quer zur Transportrichtung des Horizontalförderers verlaufende Heizkanäle 4 auf, die an in Transportrichtung verlaufende Verteilerrohre 5 bzw. Sammlerrohre 6 angeschlossen und von dem Wärmeträgermedium durchströmbar sind. Die Temperatur der Preßpatrize 1 ist, wie bereits erwähnt, vorzugsweise durch den Mengenstrom des fluiden Wärmeträgers steuerbar oder regelbar. Sie kann außerdem über die Temperatur des Wärmeträgers steuerbar oder regelbar sein. Im Ausführungsbeispiel ist die Preßpatrize 1 mit einem synthetischen Öl als Wärmeträger beheizbar. Liegt die Temperatur der zu biegenden Glasscheiben bei etwa 600° C, so weist die Preßpatrize 1 zumindest im Bereich der Glasscheibenkontaktfläche 3 eine Temperatur von etwa 200° C auf. Die Heizkanäle 4 mögen aus eingegossenen Rohren, insbesondere aus eingegossenen Stahlrohren, bestehen, was in den Figuren aus Maßstabsgründen nicht erkennbar ist. In bezug auf die thermodynamische und hydrodynamische Auslegung im einzelnen wird auf die Zahlenwerte und die übrigen Merkmale der Ansprüche 8 bis 10 verwiesen.

## Patentansprüche

1. Preßbiegestation für das Biegen von Glasscheiben im Zuge der automatischen Fertigung von innerhalb vorgegebener Losgrößen gleichen Kraftfahrzeugscheiben, bei der die zu biegenden Glasscheiben in einem Durchlaufofen auf eine vorgegebene Biegetemperatur erwärmt und unmittelbar nach dem Verlassen des Durchlaufofens mit Hilfe eines Horizontalförderers liegend in die Preßbiegestation eingeführt werden, welche Preßbiegestation in ihrem Pressengestell eine obere als beheizbare Vollform ausgeführte Preßpatrize (1) und eine untere, als Ringwerkzeug ausgeführte Preßmatrize (2) aufweist, **gekennzeichnet durch** die Kombination der folgenden Merkmale:
a) die Preßpatrize (1) besteht aus einer Aluminiumlegierung,
b) die Preßpatrize (1) besitzt Heizkanäle (4) für eine Fluidbeheizung mit Hilfe eines flüssigen Wärmeträgers und ist mit ausreichend homogener Temperaturverteilung auf eine unterhalb der Biegetemperatur liegende Wärmedehnungstemperatur beheizbar,
c) die Temperatur der Preßpatrize (1) ist über den flüssigen Wärmeträger steuerbar und/oder regelbar,
wobei die Wärmedehnungstemperatur der Preßpatrize (1) so gesteuert und/oder so geregelt ist, daß die spezifische Wärmedehnung der Preßpatrize (1) und die Wärmedehnung der mit Biegetemperatur auf die Preßmatrize (2) zentrisch aufgelegten, zu biegenden Glasscheibe praktisch übereinstimmen.

2. Preßbiegestation nach Anspruch 1, wobei die Preßpatrize (1) bei Wärmedehnungstemperatur eine der Krümmung der gebogenen Glasscheibe entsprechende Glasscheibenkontaktfläche (3) aufweist.

3. Preßbiegestation nach einem der Ansprüche 1 oder 2, wobei die Preßpatrize (1) quer zur Transportrichtung des Horizontalförderers verlaufende Heizkanäle (4) aufweist, die an in Transportrichtung verlaufende Verteilerrohre (5) bzw. Sammlerrohre (6) angeschlossen und von dem Wärmeträger durchströmbar sind.

4. Preßbiegestation nach einem der Ansprüche 1 bis 3, wobei die Temperatur der Preßpatrize (1) über den Mengenstrom und/oder die Temperatur des Wärmeträgers steuerbar oder regelbar ist.

5. Preßbiegestation nach einem der Ansprüche 1 bis 4, wobei die Preßpatrize (1) mit einem synthetischen Öl oder einem Mineralöl als Wärmeträger beheizbar ist.

6. Preßbiegestation nach einem der Ansprüche 1 bis 5, wobei bei einer Temperatur der zu biegenden Glasscheibe von etwa 600° C die Preßpatrize (1) zumindest im Bereich der Glasscheibenkontaktfläche eine Temperatur von etwa 200° C aufweist.

7. Preßbiegestation nach einem der Ansprüche 1 bis 6, wobei die Preßpatrize (1) Heizkanäle (4) aufweist, die aus eingegossenen Rohren, zum Beispiel aus eingegossenen Stahlrohren, bestehen.

8. Preßbiegestation nach einem der Ansprüche 1 bis 7, wobei die Heizkanäle (4) der Preßpatrize (1) für eine Strömungsgeschwindigkeit des Wärmeträgers von etwa 1 l/sek eingerichtet sind.

9. Preßbiegestation nach einem der Ansprüche 1 bis 8, wobei die Heizkanäle (4) der Preßpatrize (1) einen Durchmesser im Bereich von 8 bis 10 mm aufweisen.

10. Preßbiegestation nach einem der Ansprüche 1 bis 8, wobei als Wärmeträger ein bei einer Temperatur von etwa 300° C verdampfungsstabiles Mineralöl mit einer spezifischen Wärmekapazität von 1,5 bis 2,5 KJ/kg eingesetzt ist.

## Claims

1. A press-bending station for bending glass sheets in the course of the automated manufacture of motor vehicle glasses which are identical within predetermined batch sizes, wherein the glass sheets to be bent are heated in a continuous kiln to a predetermined bending temperature and directly after leaving the continuous kiln are introduced horizontally into the press-bending station by means of a horizontal conveyor, which press-bending station comprises, in its press frame, an upper male press mould (1) constructed as a solid mould which can be heated and a lower female press mould (2) constructed as a ring mould, characterised by the combination of the following features:
a) the male press mould (1) consists of an aluminium alloy,
b) the male press mould (1) has heating channels (4) for fluid heating by means of a liquid heat-transfer medium and can be heated, with a sufficiently homogeneous temperature distribution, to a thermal expansion temperature which is below the bending temperature,
c) the temperature of the male press mould (1) can be controlled and/or regulated via the liquid heat transfer medium,
wherein the thermal expansion temperature of the male press mould (1) is controlled and/or regulated so that the specific thermal expansion of the male press mould (1) and the thermal expansion of the glass sheet to be bent, which is placed centrally and at the bending temperature on the female press mould (2), practically correspond.

2. A press-bending station according to claim 1, wherein the male press mould (1) has a glass sheet contact face (3) which at the thermal expansion temperature corresponds to the curvature of the bent glass sheet.

3. A press-bending station according to either one of claims 1 or 2, wherein the male press mould (1) comprises heating channels (4) running transversely to the direction of conveying of the horizontal conveyor, which channels are connected to distributing tubes (5) or collecting tubes (6) running in the direction of conveying, and through which the heat transfer medium can flow.

4. A press-bending station according to any one of claims 1 to 3, wherein the temperature of the male press mould (1) can be controlled and/or regulated via the mass flow and/or the temperature of the heat transfer medium.

5. A press-bending station according to any one of claims 1 to 4, wherein the male press mould (1) can be heated by a synthetic oil or a mineral oil as the heat transfer medium.

6. A press-bending station according to any one of claims 1 to 5, wherein at a temperature of the glass sheet to be bent of about 600°C the male press mould (1) is at a temperature of about 200°C, at least in the region of the glass sheet contact face.

7. A press-bending station according to any one of claims 1 to 6, wherein the male press mould (1) comprises heating channels (4) which consist of cast-in tubes, for example of cast-in steel tubes.

8. A press-bending station according to any one of claims 1 to 7, wherein the heating channels (4) of the male press mould (1) are designed for a velocity of flow of the heat transfer medium of about 1 litre/second.

9. A press-bending station according to any one of claims 1 to 8, wherein the heating channels (4) of the male press mould (1) have a diameter within the range from 8 to 10 mm.

10. A press-bending station according to any one of claims 1 to 8, wherein a mineral oil which is stable towards evaporation at a temperature of about 300°C and which has a specific thermal capacity of 1.5 to 2.5 KJ/kg is used as the heat transfer medium.

## Revendications

1. Poste de presse pour le cintrage de plaques de verre au cours de la fabrication automatique de vitres, identiques dans un lot prédéterminé, pour véhicules automobiles, dans lequel les plaques de verre devant être cintrées sont chauffées dans un four continu en étant amenées à une température prédéterminée de cintrage et sont introduites à plat dans le poste de cintrage, aussitôt après avoir quitté le four continu, à l'aide d'un convoyeur horizontal, lequel poste de cintrage comporte, dans un châssis de presse, un poinçon supérieur (1) pouvant être agencé sous la forme d'un moule positif pouvant être chauffé, et une matrice inférieure (2) agencée sous la forme d'un outil annulaire, caractérisé par la combinaison des caractéristiques suivantes :
a) le poinçon (1) est formé en un alliage aluminium,
b) le poinçon (1) possède des canaux de chauffage (4) pour un dispositif de chauffage à l'aide d'un fluide caloporteur et peut être chauffé avec une répartition suffisamment homogène de température, à une température de dilatation thermique inférieure à la température de cintrage,
c) la température du poinçon (1) peut être commandée et/ou réglée au moyen du fluide caloporteur,
la température de dilatation thermique du poinçon (1) étant commandée et/ou réglée de telle sorte que la dilatation thermique spécifique du poinçon (1) et la dilatation thermique de la plaque de verre devant être cintrée, qui est appliquée, à la température de cintrage, d'une manière centrée sur le poinçon (2), sont identiques.

2. Poste de cintrage selon la revendication 1, dans lequel le poinçon (1) possède, à la température de dilatation thermique, une surface de contact (3) avec la plaque de verre, qui correspond à la courbure de la plaque de verre cintrée.

3. Poste de cintrage selon l'une des revendications 1 ou 2, dans lequel le poinçon (1) possède des canaux de chauffage (4), qui s'étendent transversalement par rapport à la direction de transport du convoyeur horizontal et qui sont raccordés à des tubes de distribution (5) ou à des tubes de collecte (6), qui s'étendent dans la direction de transport, et peuvent être traversés par le fluide caloporteur.

4. Poste de cintrage selon l'une des revendications 1 à 3, dans lequel la température du poinçon (1) peut être commandée et/ou réglée en fonction du débit et/ou de la température du fluide caloporteur.

5. Poste de cintrage selon l'une des revendications 1 à 4, dans lequel le poinçon (1) peut être chauffé avec une huile synthétique ou une huile minérale en tant que fluide caloporteur.

6. Poste de cintrage selon l'une des revendications 1 à 5, dans lequel, à une température d'environ 600°C de la plaque de verre à cintrer, le poinçon (1) possède, au moins dans la zone de la surface de contact avec la plaque de verre, une température d'environ 200°C.

7. Poste de cintrage selon l'une des revendications 1 à 6, dans lequel le poinçon (1) comporte des canaux de chauffage (4), qui sont constitués par des tubes venus de fonderie, par exemple des tubes en acier venus de fonderie.

8. Poste de cintrage selon l'une des revendications 1 à 7, dans lequel les canaux de chauffage (4) du poinçon (1) sont conçus pour une vitesse d'écoulement du fluide caloporteur d'environ 1 l/s.

9. Poste de cintrage selon l'une des revendications 1 à 8, dans lequel les canaux de chauffage (4) du poinçon (1) possèdent un diamètre dans la gamme de 8 à 10 mm.

10. Poste de cintrage selon l'une des revendications 1 à 8, dans lequel on utilise comme fluide caloporteur une huile minérale stable contre toute vaporisation à une température d'environ 300°C et possédant une capacité calorifique spécifique comprise entre 1,5 et 2,5 kJ/kg.
